# EUROPEAN PATENT APPLICATION

(11) **EP 4 104 959 A1**
(43) Date of publication of application: **21.12.2022**
(21) Application number: 21754642.3
(22) Date of filing: 21.01.2021
(51) Int. Cl.: B23C 5/06, B23C 5/20

(54) **BLADE-REPLACEABLE CUTTING TOOL HOLDER AND BLADE-REPLACEABLE CUTTING TOOL**

(30) Priority: 13.02.2020 JP 2020022579
(71) Applicant: MOLDINO Tool Engineering, Ltd., Tokyo 130-0026 (JP)
(72) Inventor: NOSHITA, Masashi, Narita-shi, Chiba 286-0825 (JP)
(74) Representative: Hoffmann Eitle
(86) International application number: PCT/JP2021/002046
(87) International publication number: WO 2021/161753

(57) **Abstract**

A mounting seat bottom surface facing a holder rotation direction; a first mounting seat wall surface (3b) facing an outer peripheral side of the holder main body (1), and a first relief portion (3d) on a corner portion where they intersect, are formed on an outer peripheral portion of a tip of a holder main body (1) rotated in a direction around an axis, on the inner peripheral side of the first mounting seat wall surface (3b), an inclined face (6) is formed in a range from an end edge (3b1) of the first mounting seat wall surface (3b) to 2 mm or less in the inner peripheral side, and the inclined face (6) being retracted toward the posterior end side in the axial direction as being extended toward the inner peripheral side, and an inclination angle θ is 20° or more and 50° or less.

## Description

### [Technical Field]

The present invention relates to an indexable cutting tool holder including a holder main body to be rotated in a holder rotation direction around an axis and insert mounting seats formed on an outer peripheral portion of a tip part of the holder main body, the insert mounting seat being configured for a cutting insert with a cutting edge to be removably mounted on.

Priority is claimed on Japanese Patent Application No. 2020-022579, filed on February 13, 2020, the content of which is incorporated herein by reference.

### [Background Art]

For example, as this indexable cutting tool holder, Patent Document 1 discloses a tool main body of an indexable cutting tool in which a cutting insert is removably mounted on an insert mounting seat formed on an outer periphery of the tool main body rotated around an axis. The insert mounting seat includes a mounting seat bottom surface on which a seating surface of the cutting insert is seated, and a mounting seat wall surface facing a tool outer peripheral side and a mounting seat wall surface facing a tool tip side with which at least two side surfaces of the cutting insert serving as an insert restraining surface come into contact.

In addition, referring to Fig. 7 of Patent Document 1, the following configuration is observed. In a corner portion where the mounting seat bottom surface of the insert mounting seat and the two mounting seat wall surfaces intersect, and a corner portion where the two mounting seat wall surfaces intersect with each other, recess portions retracted from the mounting seat bottom surface and the mounting seat wall surface are formed. The recess portions are formed as relief portions for avoiding unstable mounting of the cutting insert when an intersecting ridgeline portion between the seating surface of the cutting insert and the two side surfaces and an intersecting ridgeline portion between the two side surfaces interfere with the insert mounting seat.

### [Citation List]

### [Patent Document]

### [Patent Document 1]

Japanese Unexamined Patent Application, First Publication No. 2017-164849

### [Summary of Invention]

### [Technical Problem]

Incidentally, in the indexable cutting tool holder disclosed in Patent Document 1, as shown in Fig. 7 of Patent Document 1, an inclined face is formed on a tip surface of the tool main body on a tool inner peripheral side of the mounting seat wall surface facing the tool outer peripheral side of the insert mounting seat. The inclined face has an end edge on the tip side in an axial direction, and faces a posterior end side in the axial direction toward an inner peripheral side of the holder main body. Here, in the tool main body disclosed in Patent Document 1, as shown in Fig. 7, the end edge of the inclined face on the tip side in the axial direction coincides with the end edge of the mounting seat wall surface facing the tool outer peripheral side of the insert mounting seat on the tip side in the axial direction.

This inclined face is configured to receive a cutting load acting on the tool inner peripheral side from a cutting edge of the cutting insert. In the related art, an inclination angle of the inclined face is minimized with respect to a plane perpendicular to the axis in a cross section along the axis. In this manner, a large wall thickness of the tool main body is secured on the tool inner peripheral side of the mounting seat wall surface facing the tool outer peripheral side of the insert mounting seat. In this manner, it is a technical common sense to increase rigidity of the holder and to withstand the cutting load acting on the tool inner peripheral side. In the indexable cutting tool holder configured in this way, the inclination angle is set to 0°. That is, the following configuration is observed. The tip surface of the holder main body on the tool inner peripheral side on a wall surface facing the tool outer peripheral side of the insert mounting seat is thoroughly formed in a planar shape perpendicular to the axis.

However, when the inventor of the present invention has extensively researched this indexable cutting tool holder, the followings have been found. That is, when the inclination angle of the inclined face is decreased in this way to increase the rigidity of the inner peripheral side of the holder main body of the mounting seat wall surface facing the tool outer peripheral side of the insert mounting seat, stress caused by the cutting load acting on the inner peripheral side of the holder main body via the cutting insert from the cutting edge is concentrated on the relief portion. This relief portion is a recess formed in the corner portion where the mounting seat wall surface facing the tool outer peripheral side of the insert mounting seat and the mounting seat bottom surface intersect with each other. Then, when the stress is concentrated on the relief portion in this way, there is a possibility that the holder main body may be damaged from the relief portion.

The present invention is made under this background. An object of the present invention is to provide the indexable cutting tool holder and the indexable cutting tool which can avoid the stress caused by the cutting load from being concentrated on the relief portion formed in the corner portion where the mounting seat bottom surface facing a holder rotation direction of the insert mounting seat and the mounting seat wall surface facing the outer peripheral side of the holder main body intersect with each other, and which can prevent the holder main body from being damaged from the relief portion.

### [Solution to Problem]

Here, as a result obtained by the inventor of the present invention in further repeatedly researching the indexable cutting tool holder, the followings have been found. That is, instead of decreasing the inclination angle of the inclined face to increase the rigidity of the inner peripheral side of the holder main body of the mounting seat wall surface facing the outer peripheral side of the holder main body of the insert mounting seat as in the technical common sense in the related art described above, the inclination angle of the inclined face is conversely increased within a predetermined range with respect to the plane perpendicular to the axis in the cross section along the axis. In this manner, the stress can be dispersed to the whole insert mounting seat by providing elasticity to some extent for the inner peripheral side of the holder main body of a first mounting seat wall surface. In addition, it is possible to avoid the stress caused by the cutting load from being concentrated on the relief portion formed in the corner portion where the mounting seat bottom surface facing the holder rotation direction of the insert mounting seat and the mounting seat wall surface facing the outer peripheral side of the holder main body intersect with each other.

Therefore, according to an aspect of the present invention, in order to solve the above-described problems and achieve this object, there is provided an indexable cutting tool holder including a holder main body to be rotated in a holder rotation direction around an axis and insert mounting seats formed on an outer peripheral portion of a tip part of the holder main body, each of the insert mounting seats being configured for a cutting insert with a cutting edge to be removably mounted on, wherein the insert mounting seat includes at least, a mounting seat bottom surface that faces the holder rotation direction and is configured for a seating surface of the the cutting insert to be seated on, a first mounting seat wall surface that extends toward the holder rotation direction from the mounting seat bottom surface, faces an outer peripheral side of the holder main body, and is configured for a first side surface of the cutting insert to be abutted on, the first side surface facing an inner peripheral side of the holder main body, and a first relief portion formed in a corner portion where the first mounting seat wall surface and the mounting seat bottom surface intersect with each other and retracted with respect to the first mounting seat wall surface and the mounting seat bottom surface, on the inner peripheral side of the holder main body of the first mounting seat wall surface, an inclined face is formed in a range from an end edge of the first mounting seat wall surface on the tip side in the axial direction to 2 mm or less in the inner peripheral side in a radical direction with respect to the axis from the end edge of the first mounting seat wall surface, the inclined face including the end edge of the first mounting seat wall surface, and the inclined face being retracted toward the posterior end side in the axial direction as the inclined face being extended toward the inner peripheral side of the holder main body, and an inclination angle θ is 20° or more and 50° or less, the inclination angle θ being an angle of the inclined face with respect to a plane perpendicular to the axis in a cross section along the axis.

In addition, according to another aspect of the present invention, there is provided an indexable cutting tool including: the above-described indexable cutting tool holder; and a cutting insert having the cutting edge and removably mounted on the insert mounting seat.

In the indexable cutting tool holder and the indexable cutting tool which are configured in this way, the inclination angle θ of the inclined face is set to be relatively large as 20° or more and 50° or less. Therefore, as described above, the stress caused by the cutting load can be dispersed to and received by the whole insert mounting seat. It is possible to prevent the stress from being maximized in the first relief portion formed in the corner portion where the first mounting seat wall surface facing the outer peripheral side of the holder main body and the mounting seat bottom surface intersect with each other. Therefore, a stable cutting operation can be performed for a long period of time by preventing the holder main body from being damaged from the first relief portion.

That is, when the inclination angle θ is small to fall below 20°, based on the above-described findings, it is difficult to reduce a maximum value of the stress in the first relief portion as will be verified in examples (to be described later). In addition, an interval in the axial direction decreases in a space region between the tip surface of the holder main body and a machined face. Consequently, when a chip generated by cutting is caught in the space region, the chip is compressed, thereby causing a possibility that chip discharge capability may be impaired. In addition, even when the inclination angle θ is large to exceed 50°, the maximum value of the stress is likely to increase due to insufficient rigidity caused by a decrease in a wall thickness on the inner peripheral side of the holder main body of the first mounting seat wall surface. The inclination angle θ is preferably 20° or more and 40° or less, and is more preferably 25° or more and 35° or less.

In addition, when the end edge of the inclined face on the tip side in the axial direction is formed in a range exceeding 2 mm on the inner peripheral side in the radial direction with respect to the axis from the end edge of the first mounting seat wall surface on the tip side in the axial direction, there is the following possibility. That is, rigidity on the inner peripheral side of the holder main body of the first mounting seat wall surface extremely increases in a portion exceeding 2 mm on the inner peripheral side in the radial direction with respect to the axis, thereby causing a possibility that the maximum value of the stress may not be reduced in the first relief portion.

The interval with respect to the axis in the radial direction from the end edge of the first mounting seat wall surface on the tip side in the axial direction to the end edge of the inclined face on the tip side in the axial direction may be partially or entirely 0 mm. That is, the first mounting seat wall surface and the inclined face may partially intersect with each other, or may entirely and directly intersect with each other without using a holder tip outer peripheral surface (to be described later).

In addition, on the inner peripheral side of the holder main body of the inclined face, a holder tip inner peripheral surface may be formed to intersect with the inclined face, the holder tip inner peripheral surface being retracted toward the posterior end side in the axial direction as the holder tip inner peripheral surface being extended toward the inner peripheral side of the holder main body, and an inclination angle of the holder tip inner peripheral surface with respect to the plane perpendicular to the axis in the cross section along the axis being in a range of 0° or less than 20°. In this case, it is preferable that a ratio h/L is 0.1 or more and 0.45 or less, h being in interval (mm) between an intersection of the holder tip inner peripheral surface and the inclined face and an end edge of the inclined face on the tip side in the axial direction in the cross section in the axial direction along the axis, and L being a length (mm) of the end edge of the first mounting seat wall surface on a side in the holder rotation direction.

When the ratio h/L is small to fall below 0.1, the elasticity provided for the inner peripheral side of the holder main body of the first mounting seat wall surface may be insufficient, thereby causing a possibility that a stress dispersion effect may not be obtained. On the other hand, when this ratio h/L is conversely high to exceed 0.45, a region where the wall thickness decreases on the inner peripheral side of the holder main body with respect to the length in the axial direction of the first mounting seat wall surface increases, and the rigidity is insufficient, thereby causing a possibility that degradation such as deformation may appear on the first mounting seat wall surface. The ratio h/L is more preferably 0.1 or more and 0.35 or less, and is much more preferably 0.15 or more and 0.30 or less.

It is preferable that the inclined face has a conical surface shape formed around the axis. In this manner, the inclined face can exactly be formed at the inclination angle θ of 20° or more and 50° or less. However, when the inclination angle θ of the inclined face with respect to the plane perpendicular to the axis in the cross section along the axis is 20° or more and 50° or less, the inclined face may be formed in a convex curve shape or a concave curve shape in the cross section along the axis. Alternatively, the inclined face may be formed in a zigzag shape having a plurality of steps.

On the other hand, on the outer peripheral side of the holder main body of the inclined face, a holder tip outer peripheral surface may be disposed, the holder tip outer peripheral surface being retracted toward the posterior end side in the axial direction as the holder tip outer peripheral surface being extended toward the inner peripheral side of the holder main body, and an inclination angle of the holder tip outer peripheral surface with respect to the plane perpendicular to the axis in the cross section along the axis being in a range of 0° or less than 20°, and the holder tip outer peripheral surface may be formed between the end edge of the inclined face on the tip side in the axial direction and the end edge of the first mounting seat wall surface on the tip side in the axial direction.

When the holder tip outer peripheral surface configured in this way is partially formed between the end edge of the inclined face on the tip side in the axial direction and the end edge of the first mounting seat wall surface on the tip side in the axial direction, the following advantageous effect is obtained. That is, for example, compared to a case where the inclined face and the first mounting seat wall surface directly intersect with each other, and the end edge of the inclined face on the tip side in the axial direction and the end edge of the first mounting seat wall surface on the tip side in the axial direction linearly coincide with each other over the entire length, according to the above-described configuration of the present invention, it is possible to prevent a situation where an intersecting ridgeline between the first mounting seat wall surface and the inclined face is deformed by the cutting load.

In addition, the present invention has found a feature in a shape of the inclined face in the cross section along the axis. Therefore, in the cross section along the axis, the plane perpendicular to the axis may not exist in the holder main body. In this case, the inclination angle of the inclined face with respect to the virtual plane perpendicular to the axis is defined as the inclination angle θ.

In the indexable cutting tool holder, a holder tip inner peripheral surface may be disposed on the inner peripheral side of the holder main body of the inclined face, in the cross section along the axis, an inclination angle θ2 of the holder tip inner peripheral surface with respect to a virtual plane perpendicular to the axis is equal to or less than the inclination angle θ, the holder tip inner peripheral surface may include, a first inner peripheral surface portion having a planar shape extending in a direction perpendicular to the axis or a conical surface shape formed around the axis, and a second inner peripheral surface portion disposed between the first inner peripheral surface portion and the inclined face in the radial direction with respect to the axis, and connected to the first inner peripheral surface portion and the inclined face, and the second inner peripheral surface portion may have a concave curve shape in the cross section along the axis.

In this case, the intersection of the holder tip inner peripheral surface and the inclined face is smoothly connected by the second inner peripheral surface portion having a concave curve shape Therefore, it is possible to suppress a possibility that the stress caused by the cutting load may be concentrated on the intersection.

### [Advantageous Effects of Invention]

As described above, according to the present invention, the stress caused by the cutting load is prevented from being concentrated on the first relief portion formed in the corner portion where the first mounting seat wall surface of the insert mounting seat and the mounting seat bottom surface intersect with each other. Therefore, the stress can be dispersed to and received by the whole insert mounting seat. In this manner, a stable cutting operation can be performed for a long period of time by preventing the holder main body from being damaged from the first relief portion.

### [Brief Description of Drawings]

Fig. 1 is a side view representing an indexable cutting tool holder to an embodiment of the present invention.
Fig. 2 is a bottom view when the indexable cutting tool holder shown in Fig. 1 is viewed from a tip side in an axial direction.
Fig. 3 is a sectional view taken along line Z-Z in Fig. 2, and more specifically, is a sectional view along an axis of a holder main body passing through a point where an end edge on a tip side in the axial direction of a first mounting seat wall surface and an end edge on a tip side in the axial direction of an inclined face intersect with each other.
Fig. 4 is an enlarged sectional view of a portion A in Fig. 3.
Fig. 5 is an enlarged bottom view of a portion B in Fig. 2.
Fig. 6 is a side view representing an indexable cutting tool according to an embodiment of the present invention.
Fig. 7 is a bottom view when the indexable cutting tool shown in Fig. 6 is viewed from the tip side in the axial direction.
Fig. 8 is a sectional view representing an indexable cutting tool holder according to a modification example of the present embodiment, and more specifically, is a sectional view along the axis of the holder main body passing through the point where the end edge of the first mounting seat wall surface on the tip side in the axial direction and the end edge of the inclined face on the tip side in the axial direction intersect with each other.
Fig. 9 is an enlarged sectional view of a portion C in Fig. 8.
Fig. 10 is an enlarged sectional view representing a portion of an indexable cutting tool holder according to another modification example of the present embodiment.
Fig. 11 is a diagram representing a relationship between an inclination angle θ of the inclined face with respect to a plane perpendicular to the axis in a cross section along the axis and a maximum stress value in an example of the present invention.
Fig. 12 is a diagram representing a relationship between a ratio h/L and the maximum stress value in an example of the present invention. The ratio h/L is a ratio formed by the interval h (mm) in the axial direction between the intersection of the holder tip inner peripheral surface and the inclined face in the cross section along the axis and the end edge of the inclined face on the tip side in the axial direction, with respect to the length L (mm) of the end edge on the side in the holder rotation direction of the first mounting seat wall surface.

### [Description of Embodiments]

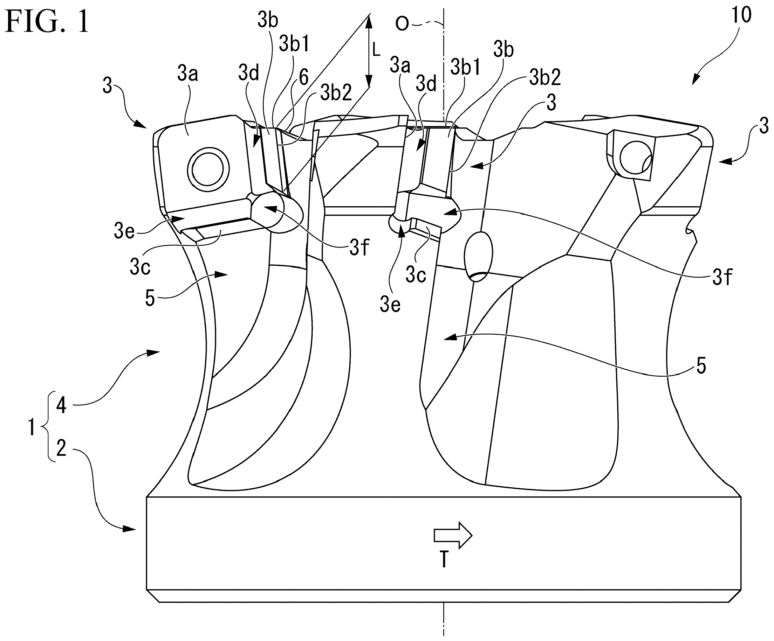

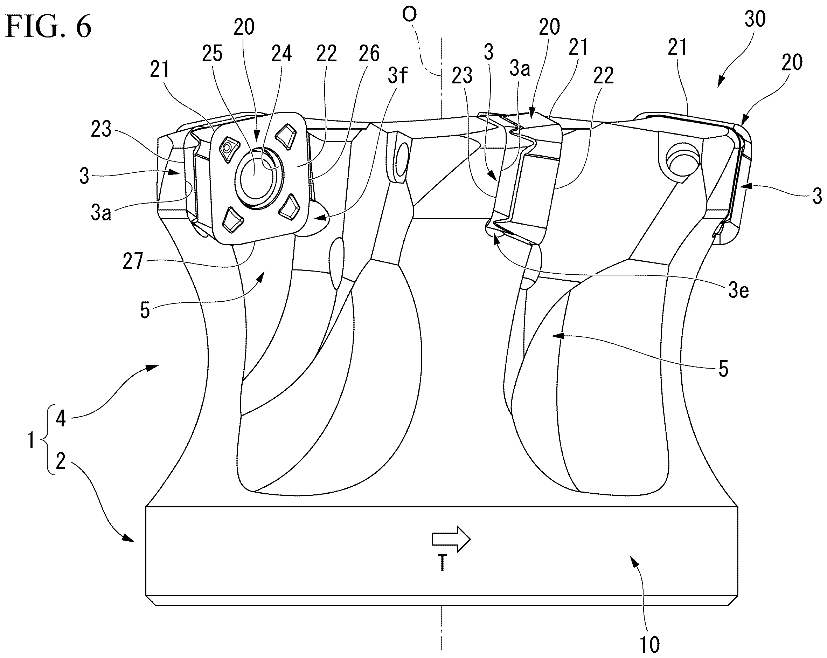

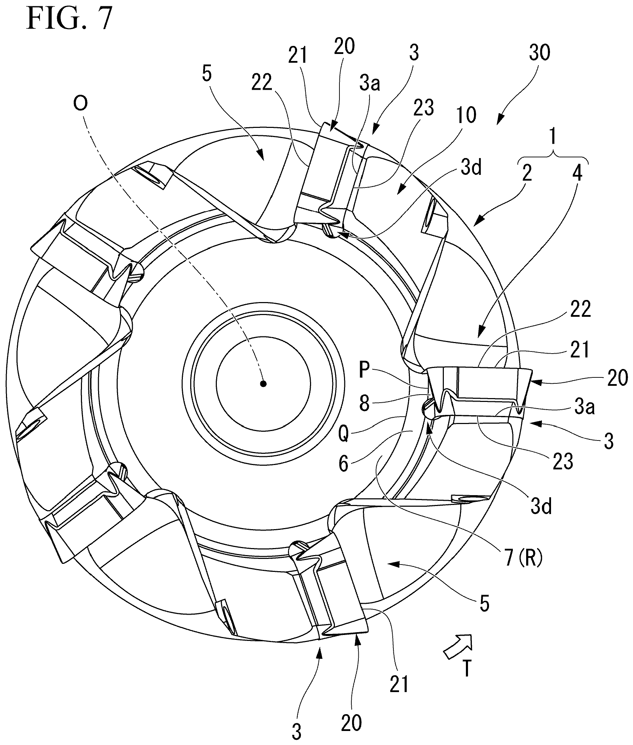

Figs. 1 to 5 show an indexable cutting tool holder 10 according to an embodiment of the present invention. Figs. 6 and 7 show an indexable cutting tool 30 according to an embodiment of the present invention. The indexable cutting tool 30 includes the indexable cutting tool holder 10 and a cutting insert 20. The indexable cutting tool holder 10 includes a holder main body 1. In the present embodiment, the holder main body 1 is formed of a metal material such as a steel material into a cylindrical shape formed around an axis O. A posterior end portion (lower portion in Figs. 1, 3, and 6) of the holder main body 1 is a mounting portion 2 mounted on a spindle of a machine tool via an arbor or the like. A tip end portion (upper portion in Figs. 1, 3, and 6) of the holder main body 1 is a cutting edge portion 4. The cutting edge portion 4 has an insert mounting seat 3 on which the cutting insert 20 including a cutting edge 21 is removably mounted.

In the present embodiment, a direction in which a tool center axis extends, that is, a direction in which the axis O extends will be referred to as an O-axis direction. In the O-axis direction, one side from the mounting portion 2 toward the cutting edge portion 4 will be referred to as a tip side in the O-axis direction or a tip side, and the other side from the cutting edge portion 4 toward the mounting portion 2 will be referred to as a posterior end side in the O-axis direction or a posterior end side.

A direction orthogonal to the axis O will be referred to as a radial direction with respect to the axis O or a radial direction. In the radial direction, a direction closer to the axis O will be referred to as an inner peripheral side in the radial direction or an inner peripheral side, and a direction away from the axis O will be referred to as an outer peripheral side in the radial direction or an outer peripheral side.

A direction turning around the axis O will be referred to as a circumferential direction. One side in the circumferential direction is a holder rotation direction T, and the other side is a side opposite to the holder rotation direction T, that is, a counter holder rotation direction.

This indexable cutting tool holder 10 is mounted on the spindle of the machine tool via the arbor in a state where the cutting insert 20 is mounted on the insert mounting seat 3. Specifically, a mounting bolt (not shown) inserted from the tip side into a stepped inner peripheral portion of the holder main body 1 is screwed into a screw hole formed in a tip end portion of the arbor. In this manner, the mounting portion 2 is mounted on the tip end portion of the arbor.

Furthermore, while the indexable cutting tool holder 10 in which the holder main body 1 is mounted on the spindle in this way is rotated in the holder rotation direction T around the axis O, the indexable cutting tool holder 10 is normally fed in a direction intersecting with the axis O. In this manner, a work material is cut by the cutting edge 21 of the cutting insert 20 mounted on the insert mounting seat 3 of the cutting edge portion 4.

The cutting edge portion 4 is formed so that an outer peripheral surface of a central portion of the holder main body 1 in the O-axis direction is constricted in a concave curve shape on the inner peripheral side. A chip pocket 5 is formed in the constricted portion to be open on the tip surface of the holder main body 1 and extend to a front side of the mounting portion 2. The chip pocket 5 has an L-shaped cross section perpendicular to the axis O. A plurality of the chip pockets 5 (five in the present embodiment) are formed at an interval (equal interval in the present embodiment) in the circumferential direction.

The insert mounting seat 3 is disposed in a tip end portion of a wall surface facing the holder rotation direction T of the chip pockets 5, and is formed as a recess open on the tip surface and the outer peripheral surface of the holder main body 1. As shown in Figs. 6 and 7, in the present embodiment, the cutting insert 20 having a substantially square plate shape and formed of a hard material such as cemented carbide is mounted on the insert mounting seat 3. That is, the indexable cutting tool holder 10 has a plurality of the insert mounting seats 3 disposed at an interval from each other in the circumferential direction, and the cutting insert 20 is mounted on each of the insert mounting seats 3. That is, the indexable cutting tool 30 includes a plurality of the cutting inserts 20 disposed at an interval from each other in the circumferential direction.

In order to mount the cutting insert 20, as shown in Figs. 1 to 5, the insert mounting seat 3 of the present embodiment includes a mounting seat bottom surface 3a, a first mounting seat wall surface 3b, and a second mounting seat wall surface 3c. The mounting seat bottom surface 3a is formed to be retracted one step from the wall surface facing the holder rotation direction T of the chip pocket 5 to a side opposite to the holder rotation direction T, and faces the holder rotation direction T. The mounting seat bottom surface 3a has a substantially square shape. The first mounting seat wall surface 3b extends to the side in the holder rotation direction T from a side ridge portion on the inner peripheral side of the holder main body 1 of the mounting seat bottom surface 3a. The first mounting seat wall surface 3b faces the outer peripheral side of the holder main body 1. The second mounting seat wall surface 3c extends to the side in the holder rotation direction T from a side ridge portion on the posterior end side of the holder main body 1 of the mounting seat bottom surface 3a. The second mounting seat wall surface 3c faces the tip side of the holder main body 1.

In addition, in a corner portion where the first mounting seat wall surface 3b and the mounting seat bottom surface 3a intersect with each other, a first relief portion 3d retracted in a concave cylindrical surface shape with respect to the first mounting seat wall surface 3b and the mounting seat bottom surface 3a is formed. In a corner portion where the second mounting seat wall surface 3c and the mounting seat bottom surface 3a intersect with each other, a second relief portion 3e retracted in a concave cylindrical surface shape with respect to the second mounting seat wall surface 3c and the mounting seat bottom surface 3a is formed. Furthermore, in a corner portion where the first and second mounting seat wall surfaces 3b and 3c intersect with each other, a third relief portion 3f retracted in a concave cylindrical surface shape with respect to the first and second mounting seat wall surfaces 3b and 3c is formed. That is, the insert mounting seat 3 includes the first relief portion 3d, the second relief portion 3e, and the third relief portion 3f.

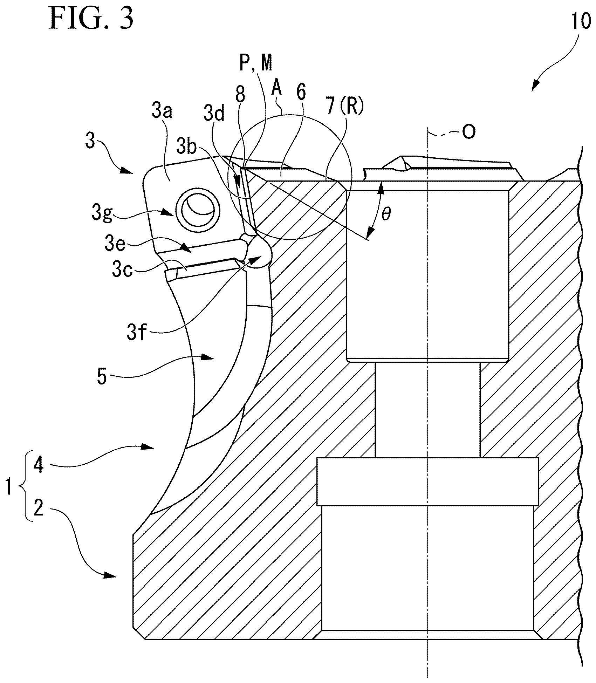

As shown in Fig. 6, the cutting insert 20 has a first square surface 22, a second square surface 23, and a mounting hole 24. The first square surface 22 is a rake face facing the holder rotation direction T. The second square surface 23 is a seating surface facing a side opposite to the holder rotation direction T and brought into close contact with the mounting seat bottom surface 3a. The mounting hole 24 is formed to penetrate a central portion of the second square surface 23 from a central portion of the first square surface 22. In addition, as shown in Fig. 3, the insert mounting seat 3 has a screw hole 3g. The screw hole 3g is formed in a central portion of the mounting seat bottom surface 3a. The cutting insert 20 is removably mounted on the insert mounting seat 3 by screwing a clamp screw 25 inserted into the mounting hole 24 from the first square surface 22 into the screw hole 3g.

In addition, as shown in Fig. 6, the cutting insert 20 has a first side surface 26 and a second side surface 27. As described above, the first side surface 26 of the cutting insert 20 faces the inner peripheral side of the holder main body 1 in a state where the second square surface 23 serving as the seating surface of the cutting insert 20 is in close contact with the mounting seat bottom surface 3a. The first side surface 26 is brought into contact with the first mounting seat wall surface 3b of the insert mounting seat 3. The second side surface 27 of the cutting insert 20 faces the posterior end side of the holder main body 1. The second side surface 27 is brought into contact with the second mounting seat wall surface 3c of the insert mounting seat 3. Then, the clamp screw 25 is screwed into the screw hole 3g. In this manner, the first and second side surfaces 26 and 27 of the cutting insert 20 are pressed against the first and second mounting seat wall surfaces 3b and 3c of the insert mounting seat 3 so that the cutting insert 20 is fixed.

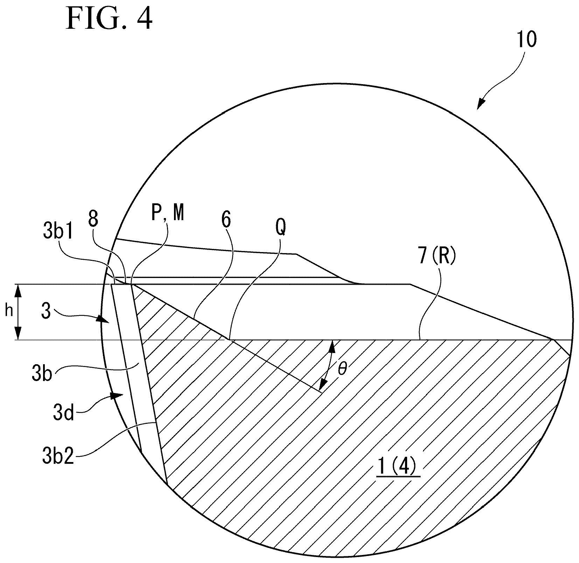

On the other hand, as shown in Figs. 1 to 5, an inclined face 6 facing the posterior end side in the O-axis direction toward the inner peripheral side of the holder main body 1 is formed on the tip surface of the holder main body 1. The inclined face 6 is disposed on the inner peripheral side of the holder main body 1 of the first mounting seat wall surface 3b. The inclined face 6 has an end edge P on the tip side in the O-axis direction in a range of 2 mm or less from the end edge 3b1 on the tip side in the O-axis direction of the first mounting seat wall surface 3b to the inner peripheral side in the radial direction with respect to the axis O. Then, as shown in Fig. 4, an inclination angle θ with respect to a plane R perpendicular to the axis O of the inclined face 6 in the cross section along the axis O is set to 20° or more and 50° or less.

In the present embodiment, a holder tip inner peripheral surface 7 is formed to intersect with the inclined face 6 on the inner peripheral side of the holder main body 1 of the inclined face 6 on the tip surface of the holder main body 1. The holder tip inner peripheral surface 7 faces the posterior end side in the O-axis direction toward the inner peripheral side of the holder main body 1 within a range where the inclination angle with respect to the plane R perpendicular to the axis O in the cross section along the axis O is 0° or less than 20°.

In particular, the holder tip inner peripheral surface 7 in the present embodiment has a planar shape in which the inclination angle with respect to the plane R perpendicular to the axis O is 0°. That is, as shown in Fig. 4, the holder tip inner peripheral surface 7 coincides with the plane R perpendicular to the axis O. Therefore, in Fig. 4, the inclination angle θ of the inclined face 6 is set to the inclination angle θ with respect to the holder tip inner peripheral surface 7.

Here, in the present embodiment, the ratio h/L formed by the interval h (mm) shown in Fig. 4 with respect to the length L (mm) shown in Fig. 1 is 0.1 or more and 0.45 or less. As shown in Fig. 4, the interval h is an interval in the O-axis direction between an intersection Q of the holder tip inner peripheral surface 7 and the inclined face 6 in the cross section along the axis O and an end edge P on the tip side in the O-axis direction of the inclined face 6. As shown in Fig. 1, the length L is a length of an end edge 3b2 on the side in the holder rotation direction T of the first mounting seat wall surface 3b.

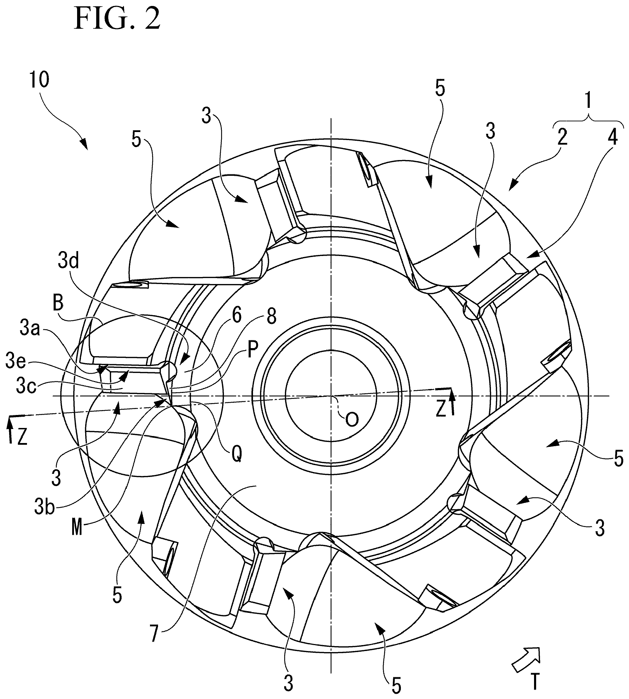

In addition, in the present embodiment, as shown in Figs. 2, 4, and 5, the end edge 3b1 on the tip side in the O-axis direction of the first mounting seat wall surface 3b and the end edge P on the tip side in the O-axis direction of the inclined face 6 intersect with each other to coincide with each other at one point M on the side in the holder rotation direction T of the first mounting seat wall surface 3b and the inclined face 6.

On the other hand, in the present embodiment, on the side opposite to the holder rotation direction T from the one point M the holder tip outer peripheral surface 8 is disposed on the outer peripheral side of the holder main body 1 of the inclined face 6 on the tip surface of the holder main body 1. The holder tip outer peripheral surface 8 faces the posterior end side in the O-axis direction toward the inner peripheral side of the holder main body 1 within a range where the inclination angle with respect to the plane perpendicular to the axis O in the cross section along the axis O is 0° or less than 20°. The holder tip outer peripheral surface 8 is formed between the end edge P on the tip side in the O-axis direction of the inclined face 6 and the end edge 3b1 on the tip side in the O-axis direction of the first mounting seat wall surface 3b.

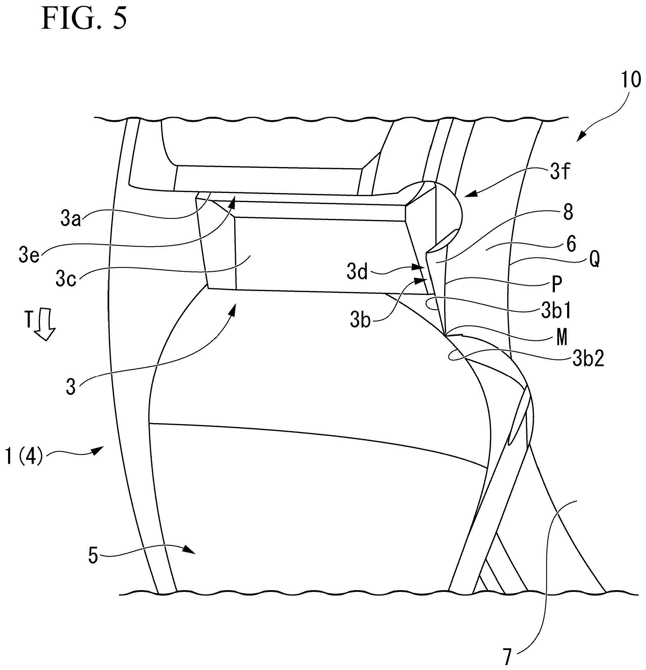

The holder tip outer peripheral surface 8 is formed in a substantially triangular shape as shown in Figs. 2 and 5 when viewed from the tip side in the O-axis direction. A width of the holder tip outer peripheral surface 8 gradually increases in the radial direction with respect to the axis O from the one point M toward the side opposite to the holder rotation direction T. An end portion of the holder tip outer peripheral surface 8 on the side opposite to the holder rotation direction T intersects with an opening portion on the tip surface of the holder main body 1 of the third relief portion 3f, and is intermediately disconnected.

However, as described above, the end edge P on the tip side in the O-axis direction of the inclined face 6 is located in a range of 2 mm or less from the end edge 3b1 on the tip side in the O-axis direction of the first mounting seat wall surface 3b to the inner peripheral side in the radial direction with respect to the axis O. Therefore, the width in the radial direction of the holder tip outer peripheral surface 8 with respect to the axis O does not exceed 2 mm.

Furthermore, the holder tip outer peripheral surface 8 in the present embodiment also has a planar shape perpendicular to the axis O, as in the holder tip inner peripheral surface 7. On the other hand, the inclined face 6 in the present embodiment is formed in a conical surface shape formed around the axis O. Therefore, the end edge P on the tip side in the O-axis direction of the inclined face 6, which is an intersecting ridgeline between the inclined face 6 and the holder tip outer peripheral surface 8, is located on one circumference formed around the axis O.

In the indexable cutting tool holder 10 and the indexable cutting tool 30 which are configured in this way, on the tip surface of the holder main body 1, the inclination angle θ of the inclined face 6 with respect to the plane R (holder tip inner peripheral surface 7 in the present embodiment) perpendicular to the axis O in a vertical sectional view taken along the axis O is set to be relatively large as 20° or more and 50° or less.

Therefore, the stress caused by the cutting load acting on the cutting insert 20 can be dispersed to the whole insert mounting seat 3. It is possible to prevent the stress from being concentrated on the first relief portion 3d of the insert mounting seat 3. In this manner, a stable cutting operation can be performed for a long period of time by preventing the holder main body 1 from being damaged from the first relief portion 3d.

Here, when the inclination angle θ is small to fall below 20°, it is difficult to reduce the maximum stress value of the first relief portion 3d. In addition, when the inclination angle θ falls below 20°, an interval in the O-axis direction decreases in a space region between the tip surface of the holder main body 1 and a machined face of a work material. Therefore, when a chip generated by cutting is caught in the space region, the chip is compressed, thereby causing a possibility that chip discharge capability may be impaired.

On the other hand, when the inclination angle θ of the inclined face 6 is conversely large to exceed 50°, a wall thickness decreases on the inner peripheral side of the holder main body 1 of the first mounting seat wall surface 3b of the insert mounting seat 3, and rigidity is insufficient. Accordingly, the stress is likely to be concentrated.

In the present embodiment, the holder tip outer peripheral surface 8 is formed between the end edge P on the tip side in the O-axis direction of the inclined face 6 and the end edge 3b1 on the tip side in the O-axis direction of the first mounting seat wall surface 3b. When the width in the radial direction of the holder tip outer peripheral surface 8 with respect to the axis O, that is, the interval in the radial direction with respect to the axis O between the end edge P on the tip side in the O-axis direction of the inclined face 6 and the end edge 3b1 on the tip side in the O-axis direction of the first mounting seat wall surface 3b exceeds 2 mm, there is the following possibility. That is, the wall thickness increases on the inner peripheral side of the holder main body 1 of the first mounting seat wall surface 3b, and the rigidity increases, thereby causing a possibility that the stress may not be dispersed. Therefore, the end edge P on the tip side in the O-axis direction of the inclined face 6 is formed to be located within a range of 2 mm or less from the end edge 3b1 on the tip side in the O-axis direction of the first mounting seat wall surface 3b to the inner peripheral side in the radial direction with respect to the axis O.

In addition, in the present embodiment, the holder tip inner peripheral surface 7 is formed to intersect with the inclined face on the inner peripheral side of the holder main body 1 of the inclined face 6. The holder tip inner peripheral surface 7 faces the posterior end side in the O-axis direction toward the inner peripheral side of the holder main body 1 within a range where the inclination angle with respect to the plane perpendicular to the axis O in the cross section along the axis O is 0° or less than 20°. Therefore, it is possible to avoid the inclined face 6 from reaching the inner peripheral portion of the cylindrical holder main body 1 while maintaining the inclination angle θ, and it is possible to prevent the rigidity of the cutting edge portion 4 of the holder main body 1 from being unnecessarily impaired.

When the holder tip inner peripheral surface 7 intersecting with the inclined face 6 is formed on the inner peripheral side of the holder main body 1 of the inclined face 6 in this way, it is preferable to adopt the following configuration. That is, as in the present embodiment, the ratio h/L formed by the interval h (mm) in the O-axis direction between the intersection Q of the holder tip inner peripheral surface 7 and the inclined face 6 in the cross section along the axis O and the end edge P on the tip side in the O-axis direction of the inclined face 6, with respect to the length L (mm) of the end edge 3b2 on the side in the holder rotation direction T of the first mounting seat wall surface 3b is preferably 0.1 or more and 0.45 or less.

When the ratio h/L is small to fall below 0.1, elasticity provided for the inner peripheral side of the holder main body 1 of the first mounting seat wall surface 3b is insufficient, thereby causing a possibility that a stress dispersion effect may not be obtained. On the other hand, when the ratio h/L is conversely high to exceed 0.45, the wall thickness decreases on the inner peripheral side of the holder main body 1 of the first mounting seat wall surface 3b with respect to the length L (mm) of the end edge 3b2, which is the length in the O-axis direction of the first mounting seat wall surface 3b, and the rigidity is insufficient, thereby causing a possibility that degradation such as deformation may appear on the first mounting seat wall surface 3b.

In addition, in the present embodiment, the inclined face 6 has a conical surface shape formed around the axis O. In the cross section along the axis O, the inclined face 6 faces the posterior end side in the O-axis direction as the inclined face 6 linearly faces the inner peripheral side of the holder main body 1 at the constant inclination angle θ as shown in Figs. 3 and 4. Therefore, when the inclined face 6 is formed, the inclination angle θ can accurately be set to 20° or more and 50° or less.

However, in the present embodiment, although the inclined face 6 is formed in the conical surface shape formed around the axis O in this way, the present invention is not limited thereto. When the inclination angle θ with respect to the plane R perpendicular to the axis O of the inclined face 6 in the cross section along the axis O is 20° or more and 50° or less, the inclined face 6 may be formed in a convex curve shape or a concave curve shape in the cross section along the axis O. Alternatively, the inclined face may be formed in a zigzag shape having a plurality of steps.

Furthermore, in the present embodiment, the holder tip outer peripheral surface 8 is formed on the outer peripheral side from the inclined face 6 of the tip surface of the holder main body 1. The holder tip outer peripheral surface 8 faces the posterior end side in the O-axis direction toward the inner peripheral side of the holder main body 1 within a range where the inclination angle with respect to the plane R perpendicular to the axis O in the cross section along the axis O is 0° or less than 20°. Therefore, the holder tip outer peripheral surface 8 is formed between the end edge P on the tip side in the O-axis direction of the inclined face 6 and the end edge 3b1 on the tip side in the O-axis direction of the first mounting seat wall surface 3b.

Therefore, for example, compared to a case where the inclined face 6 on the tip surface of the holder main body 1 and the first mounting seat wall surface 3b directly intersect with each other at one intersecting ridgeline, and the end edge P on the tip side in the O-axis direction of the inclined face 6 and the end edge 3b1 on the tip side in the O-axis direction of the first mounting seat wall surface 3b linearly coincide with each other at the intersecting ridgeline over the entire length, the following advantageous effects can be obtained according to the present embodiment. That is, in the present embodiment, it is possible to prevent the intersecting ridgeline between the first mounting seat wall surface 3b and the inclined face 6 from being deformed due to the cutting load, and a stable cutting operation can be performed for a longer period of time.

In the present embodiment, the end edge 3b1 on the tip side of the O-axis direction of the first mounting seat wall surface 3b and the end edge P on the tip side of the O-axis direction of the inclined face 6 intersect with each other to coincide with each other at one point M on the side in the holder rotation direction T of the first mounting seat wall surface 3b and the inclined face 6. Then, the holder tip outer peripheral surface 8 is formed on the side opposite to the holder rotation direction T from this one point M. Without being limited thereto, when the width in the radial direction with respect to the axis O does of the holder tip outer peripheral surface 8 does not exceed 2 mm, the end edge 3b1 on the tip side in the O-axis direction of the first mounting seat wall surface 3b and the end edge P on the tip side in the O-axis direction of the inclined face 6 may not intersect with each other. That is, the holder tip outer peripheral surface 8 may be formed over the entire length of the end edge 3b1 on the tip side in the O-axis direction of the first mounting seat wall surface 3b.

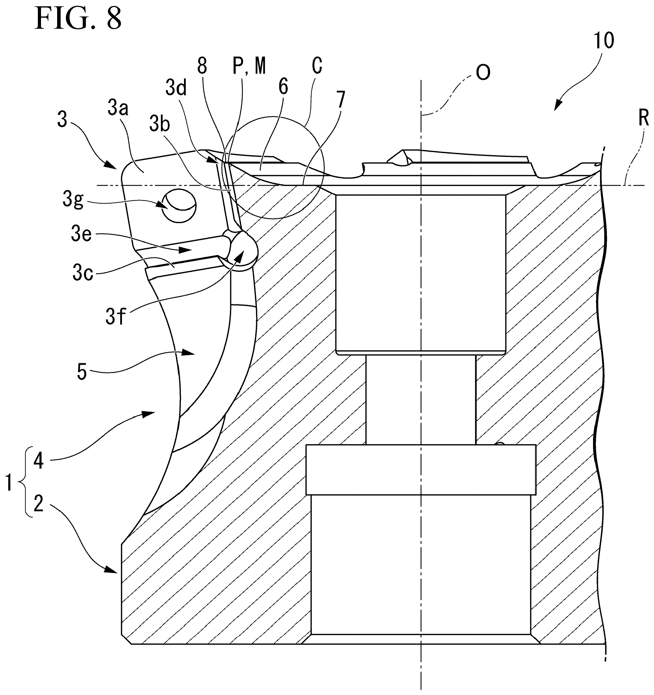

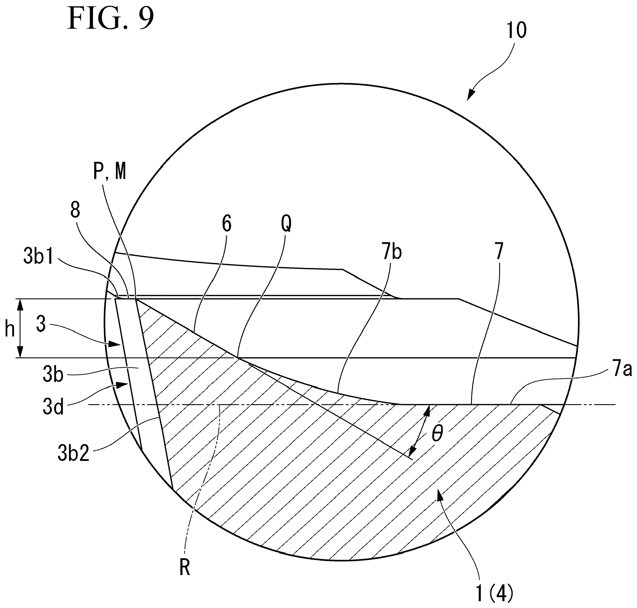

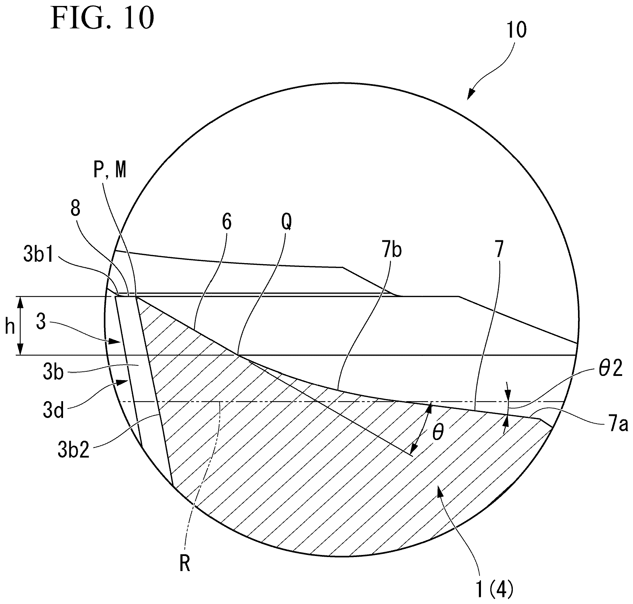

Figs. 8 to 10 are sectional views representing the indexable cutting tool holder 10 according to a modification example of the present embodiment. Specifically, Figs. 8 and 9 show one modification example, and Fig. 10 shows another modification example. In the illustrated modification examples, the same reference numerals will be assigned to configuration elements the same as those in the present embodiment described above, and different points will mainly be described below.

In the modification examples, the holder tip inner peripheral surface 7 is disposed on the inner peripheral side of the holder main body 1 of the inclined face 6. As shown in Figs. 8 to 10, in the cross section along the axis O, the plane perpendicular to the axis O may be a virtual plane R, and an inclination angle θ2 of the holder tip inner peripheral surface 7 with respect to the virtual plane R is equal to or less than the inclination angle θ with respect to the virtual plane R of the inclined face 6 (refer to Fig. 10). Then, the holder tip inner peripheral surface 7 has a first inner peripheral surface portion 7a and a second inner peripheral surface portion 7b.

In one modification example shown in Figs. 8 and 9, the first inner peripheral surface portion 7a has a planar shape extending in a direction perpendicular to the axis O. That is, in this modification example, the first inner peripheral surface portion 7a corresponds to a portion of the virtual plane R perpendicular to the axis O. However, without being limited thereto, the first inner peripheral surface portion 7a may have a conical surface shape formed around the axis O. In another modification example shown in Fig. 10, the first inner peripheral surface portion 7a has a conical surface shape located on the posterior end side in the O-axis direction toward the inner peripheral side in the radial direction. Alternatively, although not particularly shown, the first inner peripheral surface portion 7a may have the conical surface shape located on the tip side in the O-axis direction toward the inner peripheral side in the radial direction.

The second inner peripheral surface portion 7b is disposed between the first inner peripheral surface portion 7a and the inclined face 6 in the radial direction with respect to the axis O. The second inner peripheral surface portion 7b has a concave curve shape. The second inner peripheral surface portion 7b has a concave curve shape in the cross section along the axis O. The second inner peripheral surface portion 7b is connected to the first inner peripheral surface portion 7a and the inclined face 6.

Specifically, an end portion on the outer peripheral side of the second inner peripheral surface portion 7b is connected to an end portion on the inner peripheral side of the inclined face 6 via the intersection Q. In each of the modification examples shown in Figs. 9 and 10, a tangent line in the end portion on the outer peripheral side of the second inner peripheral surface portion 7b coincides with the inclined face 6 in a vertical sectional view taken along the axis O. That is, the second inner peripheral surface portion 7b and the inclined face 6 are smoothly connected to be in contact with each other. However, without being limited thereto, the tangent line in the end portion on the outer peripheral side of the second inner peripheral surface portion 7b may not coincide with the inclined face 6 in the vertical sectional view.

In addition, the end portion on the inner peripheral side of the second inner peripheral surface portion 7b is connected to the end portion on the outer peripheral side of the first inner peripheral surface portion 7a. In one modification example shown in Fig. 9, the tangent line in the end portion on the inner peripheral side of the second inner peripheral surface portion 7b does not coincide with the first inner peripheral surface portion 7a in the vertical sectional view. However, without being limited thereto, as in another modification example shown in Fig. 10, the tangent line in the end portion on the inner peripheral side of the second inner peripheral surface portion 7b may coincide with the first inner peripheral surface portion 7a in the vertical sectional view. That is, the second inner peripheral surface portion 7b and the first inner peripheral surface portion 7a may smoothly be connected to be in contact with each other.

According to each of the modification examples shown in Figs. 8 to 10, the intersection Q between the holder tip inner peripheral surface 7 and the inclined face 6 is smoothly connected by the second inner peripheral surface portion 7b having a concave curve shape. Therefore, a possibility that the stress caused by the cutting load may be concentrated on the intersection Q is suppressed.

In the present invention, the respective configurations described in the embodiments and modification examples may be combined with each other within the scope not departing from the concept of the present invention. The configurations can be added, omitted, substituted, or modified in various ways. In addition, without being limited by the above-described embodiments, the present invention is limited only by the appended claims.

### [Example 1]

Next, examples of the present invention will be described with reference to the above-described embodiments. First, in Example 1, a relationship between the inclination angle θ with respect to the plane R perpendicular to the axis O of the inclined face 6 in the cross section along the axis O and the maximum stress value will be described. In Example 1, the indexable cutting tool holder 10 and the indexable cutting tool 30 in which a diameter 3 (diameter of a circle formed by an outer peripheral end of the cutting edge 21 around the axis O) of the cutting edge 21 of the cutting insert 20 mounted on the insert mounting seat is 63 mm is prepared. Then, when the inclination angle θ(°) of the inclined face 6 is changed in a range of 10° to 70° in the indexable cutting tool holder 10 and the indexable cutting tool 30, a transition of the maximum stress value (MPa) is confirmed by performing a finite element analysis (hereinafter, referred to as a CAE analysis) using finite element analysis simulation software.

The stress value applied in the CAE analysis is calculated, based on measured maximum resistance values. Specifically, one cutting insert 20 is mounted on the holder main body 1 of the indexable cutting tool holder 10. A cutting test is performed on work material having a hardness of 32 HRC under cutting conditions of a cutting speed Vc = 140 m/min, a feed amount per one blade fz = 2.0 mm/t, a cutting depth in the O-axis direction ap = 1.0 mm, and a cutting depth in a radius direction with respect to the axis O ae = 45 mm. In this test, a maximum resistance value of 4517.2N is obtained.

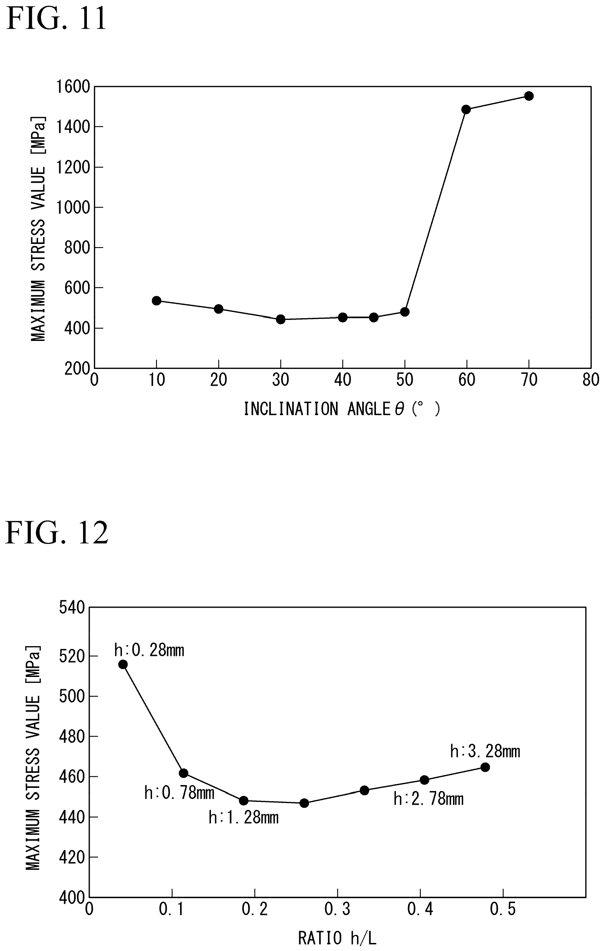

Furthermore, component forces of the maximum resistance value of 4517.2N are a main component force of 3965.3N and a back component force of 2164.3N. Accordingly, each of the following stress values is used in the CAE analysis. That is, the stress value obtained by dividing the main component force of 3965.3N by an area of each surface is used for the first mounting seat wall surface 3b and the mounting seat bottom surface 3a. The stress value obtained by dividing the back component force of 2164.3N by an area of a restraining surface in the O-axis direction is used for the second mounting seat wall surface 3c. In addition, a material of the holder main body 1 is set to a steel material having a Young's modulus of 210 GPa and a Poisson's ratio of 0.3 to perform the CAE analysis. The result is shown in Fig. 11.

Under the analysis conditions in the CAE analysis, a position of the end edge P on the tip side in the O-axis direction of the inclined face 6 is fixed on the circumference having a radius of 19.17 mm from the axis O. In addition, the inclination angle θ is changed so that the interval h (mm) in the O-axis direction between the intersection Q of the holder tip inner peripheral surface 7 and the inclined face 6 in the cross section along the axis O and the end edge P of the inclined face 6 on the tip side in the O-axis direction is 1.28 mm. In addition, both the holder tip inner peripheral surface 7 and the holder tip outer peripheral surface 8 of the tip surface of the holder main body 1 are planes perpendicular to the axis O.

Here, the maximum stress value (MPa) is an index of damage to the holder main body 1 of the indexable cutting tool holder 10. The reason is as follows. The damage to the holder main body 1 of the indexable cutting tool holder 10 is mainly caused by repeated fatigue occurring when the indexable cutting tool 30 intermittently comes into contact with the work material during the cutting operation. The repeated fatigue occurs in a portion where repeated stress is likely to be received, that is, a portion where the maximum stress value is shown. Therefore, the maximum stress value is used as an index of the damage to the holder main body 1.

Based on the result shown in Fig. 11, the following can be understood. When the inclination angle θ of the inclined face 6 is 20° or more and 50° or less, the maximum stress value is suppressed to approximately 500 MPa or less, and the maximum stress value is reduced.

In contrast, when the inclination angle θ is 10° which is smaller than 20°, the maximum stress value exceeded 500 MPa, and the maximum stress value is insufficiently reduced. When the inclination angle θ is smaller than 20°, the inclined face 6 is closer to a machined face (bottom surface) of the work material formed by the cutting operation, and a space region on the tip surface side of the holder main body 1 is narrowed. Therefore, a chip generated by the cutting operation is crushed and compressed in the space region, thereby causing a possibility that chip discharge capability may adversely be affected.

On the other hand, when the inclination angle θ of the inclined inclined face 6 is 60° which exceeds 50°, the wall thickness decreases on the inner peripheral side of the holder main body 1 of the inclined face 6. Accordingly, the maximum stress value rises at once up to approximately 1500 MPa. It can be understood that the holder main body 1 is likely to be damaged from the first relief portion 3d due to stress concentration caused by the cutting load.

### [Example 2]

Next, a relationship between the ratio h/L and the maximum stress value (MPa) will be described as Example 2, based on the above-described embodiment. The ratio h/L is a ratio formed by the interval h (mm) in the O-axis direction between the intersection Q of the holder tip inner peripheral surface 7 and the inclined face 6 in the cross section along the axis O and the end edge P on the tip side in the O-axis direction of the inclined face 6, with respect to the length L (mm) of the end edge 3b2 on the side in the holder rotation direction T of the first mounting seat wall surface 3b. The setting conditions for the CAE analysis are the same as those in Example 1.

In Example 2, the indexable cutting tool holder 10 and the indexable cutting tool 30 in which the diameter of the cutting edge 21 of the cutting insert 20 mounted on the insert mounting seat 3 is 63 mm is also prepared. In the indexable cutting tool holder 10 and the indexable cutting tool 30, the inclination angle θ (°) of the inclined face 6 is fixed to 30°, and the length L (mm) of the end edge 3b2 on the side in the holder rotation direction T of the first mounting seat wall surface 3b is fixed to 6.85 mm. Then, a position of the holder tip inner peripheral surface 7 in the O-axis direction is adjusted. When the interval h (mm) in the O-axis direction between the intersection Q of the holder tip inner peripheral surface 7 and the inclined face 6 in the cross section along the axis O and the end edge P on the tip side in the O-axis direction of the inclined face 6 is changed, the CAE analysis is used to simulate a transition of the maximum stress value (MPa). The result is shown in Fig. 12.

Under the analysis conditions in the CAE analysis in Example 2, the position of the end edge P on the tip side in the O-axis direction of the inclined face 6 is also located on the circumference having the radius of 19.17 mm from the axis O. In addition, both the holder tip inner peripheral surface 7 and the holder tip outer peripheral surface 8 on the tip surface of the holder main body 1 are planes perpendicular to the axis O.

Based on the result shown in Fig. 12, as described above, when the length L (mm) is 6.85 mm, and when the interval h (mm) is 0.78 mm to 2.78 mm, the ratio h/L is 0. 1 or more and 0.45 or less. When the ratio h/L is 0.1 or more and 0.45 or less, the maximum stress value falls within a range of approximately 460 MPa or less, and it can be understood that the stress is dispersed and the maximum stress value is reduced.

In contrast, when the interval h is 0.28 mm, the ratio h/L is 0.04 which falls below 0.1. In this case, the maximum stress value rises at once up to 500 MPa or greater. The following can be understood. Since the interval h (mm) decreases, rigidity of the inner peripheral side of the holder main body 1 of the first mounting seat wall surface 3b increases, and the stress is not sufficiently dispersed.

On the other hand, when the interval h is 3.28 mm, the ratio h/L is 0.48 which exceeds 0.45. Even in this case, the maximum stress value slightly exceeds 460 MPa, and it can be understood that the stress is insufficiently dispersed, compared to a case where the ratio h/L is 0.1 or more and 0.45 or less. In addition, in this case, the interval h (mm), that is, the height in the O-axis direction of the inclined face 6 increases, compared to the length L (mm) of the end edge 3b2 on the side in the holder rotation direction T of the first mounting seat wall surface 3b. A region where the wall thickness decreases on the inner peripheral side of the holder main body 1 of the first mounting seat wall surface 3b increases. Accordingly, the rigidity of the holder main body 1 is insufficient in the region, thereby causing a possibility that degradation such as deformation may appear on the first mounting seat wall surface 3b.

### [Industrial Applicability]

According to the indexable cutting tool holder and the indexable cutting tool of the present invention, the stress caused by the cutting load is prevented from being concentrated on the first relief portion formed in the corner portion where the first mounting seat wall surface of the insert mounting seat and the mounting seat bottom surface intersect with each other. Therefore, the stress can be dispersed to and received by the whole insert mounting seat. In this manner, a stable cutting operation can be performed for a long period of time by preventing the holder main body from being damaged from the first relief portion. Therefore, the present invention has industrial applicability.

### [Reference Signs List]

1: Holder main body
2: Mounting portion
3: Insert mounting seat
3a: Mounting seat bottom surface
3b: First mounting seat wall surface
3b1: End edge of first mounting seat wall surface 3b on tip side in O-axis direction
3b2: End edge of first mounting seat wall surface 3b on side in holder rotation direction T
3c: Second mounting seat wall surface
3d: First relief portion
3e: Second relief portion
3f: Third relief portion
4: Cutting edge portion
5: Chip pocket
6: Inclined face
7: Holder tip inner peripheral surface
7a: First inner peripheral surface portion
7b: Second inner peripheral surface portion
8: Holder tip outer peripheral surface
10: Indexable cutting tool holder
20: Cutting insert
21: Cutting edge
23: Second square surface (seating surface)
26: First side surface
30: Indexable cutting tool
O: Axis of holder main body 1
T: Holder rotation direction
θ: Inclination angle of inclined face 6
θ2: Inclination angle of holder tip inner peripheral surface 7
P: End edge of inclined face 6 on tip side in O-axis direction
Q: Intersection of holder tip inner peripheral surface 7 and inclined face 6 in cross section along O-axis
R: Plane perpendicular to O-axis (holder tip inner peripheral surface)
L: Length of end edge 3b2 of first mounting seat wall surface 3b on side in holder rotation direction T
h: Interval in O-axis direction between intersection Q of holder tip inner peripheral surface 7 and inclined face 6 in cross section along O-axis and end edge P of inclined face 6 on tip side in O-axis direction

## Claims

1. An indexable cutting tool holder comprising a holder main body to be rotated in a holder rotation direction around an axis and insert mounting seats formed on an outer peripheral portion of a tip part of the holder main body, the insert mounting seat being configured for a cutting insert with a cutting edge to be removably mounted on,
wherein each of the insert mounting seats includes at least,
a mounting seat bottom surface that faces the holder rotation direction and is configured for a seating surface of the the cutting insert to be seated on,
a first mounting seat wall surface that extends toward the holder rotation direction from the mounting seat bottom surface, faces an outer peripheral side of the holder main body, and is configured for a first side surface of the cutting insert to be abutted on, the first side surface facing an inner peripheral side of the holder main body, and
a first relief portion formed in a corner portion where the first mounting seat wall surface and the mounting seat bottom surface intersect with each other and retracted with respect to the first mounting seat wall surface and the mounting seat bottom surface,
on the inner peripheral side of the holder main body of the first mounting seat wall surface, an inclined face is formed in a range from an end edge of the first mounting seat wall surface on the tip side in the axial direction to 2 mm or less in the inner peripheral side in a radical direction with respect to the axis from the end edge of the first mounting seat wall surface, the inclined face including the end edge of the first mounting seat wall surface, and the inclined face being retracted toward the posterior end side in the axial direction as the inclined face being extended toward the inner peripheral side of the holder main body, and
an inclination angle θ is 20° or more and 50° or less, the inclination angle θ being an angle of the inclined face with respect to a plane perpendicular to the axis in a cross section along the axis.

2. The indexable cutting tool holder according to Claim 1,
wherein on the inner peripheral side of the holder main body of the inclined face, a holder tip inner peripheral surface is formed to intersect with the inclined face, the holder tip inner peripheral surface being retracted toward the posterior end side in the axial direction as the holder tip inner peripheral surface being extended toward the inner peripheral side of the holder main body, and an inclination angle of the holder tip inner peripheral surface with respect to the plane perpendicular to the axis in the cross section along the axis being in a range of 0° or less than 20°, and
a ratio h/L is 0.1 or more and 0.45 or less, h being in interval (mm) between an intersection of the holder tip inner peripheral surface and the inclined face and an end edge of the inclined face on the tip side in the axial direction in the cross section in the axial direction along the axis, and L being a length (mm) of the end edge of the first mounting seat wall surface on a side in the holder rotation direction.

3. The indexable cutting tool holder according to Claim 1 or 2,
wherein the inclined face has a conical surface shape formed around the axis.

4. The indexable cutting tool holder according to any one of Claims 1 to 3,
wherein on the outer peripheral side of the holder main body of the inclined face, a holder tip outer peripheral surface is disposed, the holder tip outer peripheral surface being retracted toward the posterior end side in the axial direction as the holder tip outer peripheral surface being extended toward the inner peripheral side of the holder main body, and an inclination angle of the holder tip outer peripheral surface with respect to the plane perpendicular to the axis in the cross section along the axis being in a range of 0° or less than 20°, and
the holder tip outer peripheral surface is formed between the end edge of the inclined face on the tip side in the axial direction and the end edge of the first mounting seat wall surface on the tip side in the axial direction.

5. The indexable cutting tool holder according to Claim 1,
wherein a holder tip inner peripheral surface is disposed on the inner peripheral side of the holder main body of the inclined face,
in the cross section along the axis, an inclination angle θ2 of the holder tip inner peripheral surface with respect to a virtual plane perpendicular to the axis is equal to or less than the inclination angle θ,
the holder tip inner peripheral surface includes,
a first inner peripheral surface portion having a planar shape extending in a direction perpendicular to the axis or a conical surface shape formed around the axis, and
a second inner peripheral surface portion disposed between the first inner peripheral surface portion and the inclined face in the radial direction with respect to the axis, and connected to the first inner peripheral surface portion and the inclined face, and
the second inner peripheral surface portion has a concave curve shape in the cross section along the axis.

6. An indexable cutting tool comprising:
the indexable cutting tool holder according to any one of Claims 1 to 5; and
a cutting insert having the cutting edge and removably mounted on the insert mounting seat.
